# EUROPEAN PATENT SPECIFICATION

(11) **EP 0 521 833 B1**
(45) Date of publication and mention of the grant of the patent: **06.12.1995**
(21) Application number: 92830342.9
(22) Date of filing: 01.07.1992
(51) Int. Cl.: F24C 3/06

(54) **Infrared radiating gas burners for glass-ceramics cooking decks**
Infrarotstrahlungsbrenner für Glaskeramik-Kochmulde
Brûleurs à rayonnement infrarouge pour plaques de cuisson en vitro-céramique

(30) Priority: 01.07.1991 IT MI911801
(43) Date of publication of application: 07.01.1993
(73) Proprietor: SMEG S.p.A., Guastalla (Reggio Emilia) (IT)
(72) Inventor: Bertazzoni, Roberto, Guastalla (RE) (IT)
(74) Representative: Adorno, Silvano

(56) References cited:
- FR-A- 2 082 312
- FR-A- 2 340 671
- US-A- 3 830 216
- US-A- 3 843 313

## Description

This invention concerns a gas burner assembly for heating by means of infrared radiation, for glass-ceramics cooking decks both flush-mounted and free standing. Gas burners are already known in which the flame, rather than being free like in conventional stoves and cooking decks, is generated within an infrared radiating body lined with a glass-ceramics plate, whereby heating takes place through infrared radiation and thermal conduction from said plate, without requiring support grills for the cooking containers as it is the case instead for the free flame burners, whereby the cooking deck can be cleaned faster and more accurately.

However, in the presently known apparatus of this kind few drawbacks are still present, caused by both an excessive overall height required and by an attainable efficiency which is positively not high. In fact, for discharging the exhaust gases deriving from gas combustion, there is normally provided a forced ventilation exhaust arrangement which, besides a complication of the burner structure, causes inevitable obstructions with its components, and directs said exhaust gases towards the back side of the cooking deck, where they are exhausted to the environment. In such a way a portion of the heat content provided by gas combustion gets wasted to the environment and cannot be utilized.

In addition, thermal radiation is mainly generated by the area of the radiating body (normally made of steatite) which is directly impinged on by the flames, whereby the heat distribution on the whole surface of the glass-ceramics plate does not take place in a desirable uniform fashion.

It is true that, in trying to improve the burner thermal efficiency, an arrangement has sometimes been adopted having openings in said glass-ceramics plate, in order to create a better contact between the bottom of the cooking container and the generated heat, but in this case there is still a need for pot-supporting grilles and the cleaning of the cooking deck becomes more difficult, whereby the typical advantages of the glass-ceramics decks must be renounced.

From US-A-3 843 313 radiant burners are known to be housed in a burner box associated with a plate of a cooktop. Around its periphery each plate is spaced slightly from the adjacent wall of the respective burner box, thus providing air vents which are not in communication with the combustion zone and do not help the heating efficiency.

It is an object of the present invention to provide a gas burner assembly having the general features described above, by use of which it is possible to overcome the foregoing drawbacks of the state of the art.

Such an object is achieved by a gas burner assembly having the features of claim 1, which therefore shows an arrangement to discharge naturally to the outside the combustion exhaust gases, without forced ventilation, through slits cut in the peripheral wall of the burner itself.

Also according to the features of claim 1, said peripheral wall is provided by the same metal sheet of the cooking deck, in the fillet area with the glass-ceramics plate. In this way, in addition to obtaining a lower overall height of the burner, the combustion exhaust gases, before discharging to the environment, flow around the bottom of the cooking container resting on the plate, and they transfer thereto, by a convection effect, an additional portion of the heat which otherwise would be lost.

Furthermore, still according to this invention, the gas flow reaching the burner can be continuously controlled, from a minimum value to a maximum (contrary to available practice for the glass-ceramics cooking decks presently on the market, which work on an "on-off" basis with electronic monitoring of the flame) in that there is provided a flowrate control valve, preferably a double outlet one, for directing separate gas flows to a central area and to a peripheral area of the burner, so that the combustion-generated heat may be distributed in a more uniform fashion.

Advantages of a simpler and more space-effective contruction are obtained in this way, together with a higher thermal efficiency by using the heat of the combustion exhaust gases, without renouncing the typical advantages of the glass-ceramics cooking decks and without having to use support grilles or in any way worsen the maintenance conditions of said deck.

The above and further objects, features and advantages of the burner assembly of this invention will become more apparent from the following detailed description of a preferred embodiment thereof, reported herein for exemplary and non limiting purposes, referring to the attached drawings, wherein:
Figure 1 is a top plan view of a gas burner assembly according to this invention; and
Figure 2 is a cross-sectional view along line II-II of Figure 1.

Referring now to the drawings, the gas burner assembly, which is mounted on a cooking deck 1, normally enamelled metal sheet or stainless steel, includes an infrared radiating body 2, comprised for instance of steatite, and having the outlet of at least one gas feeding pipe 3 therewithin. As it is known, when a flame induced by a small ignition spark-plug 13, for instance a piezoelectric one, controlled from outside, impinges on said body 2, the latter begins to generate infrared radiations, with well known heating properties, different and in some respect even better than the ones of the free flame.

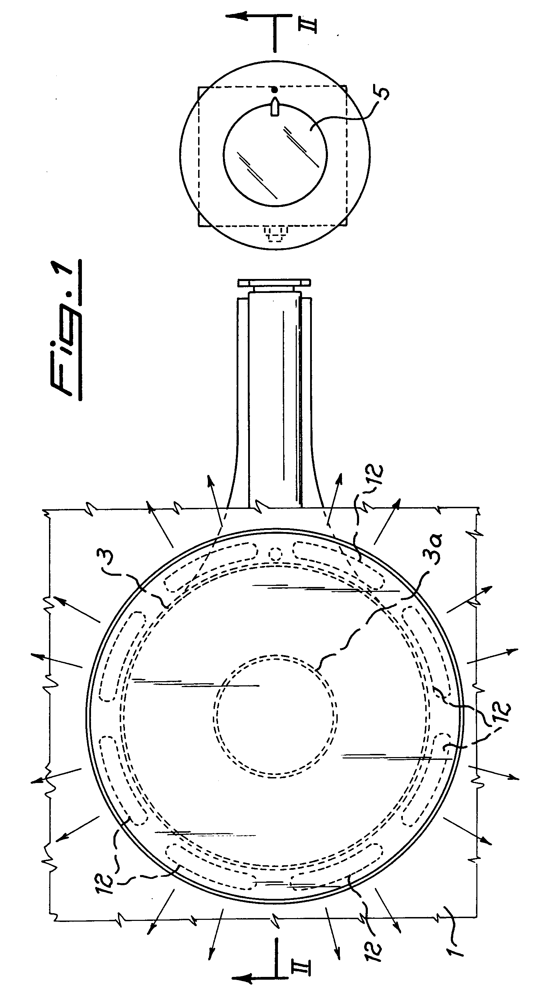

In the embodiment shown herein, two gas feeding pipes are provided, i.e. an inner pipe 3a separated from the outer one shown at 3. Each of them is fed through a respective outlet port 6 and 6a of a single valve 5. It should be noted that pipe 3a, which is provided to feed the burner central area, has a smaller cross-section compared to pipe 3 whose end portion, close to the combustion area, coaxially surrounds inner pipe 3a, as it is perhaps more apparent from the plan view of Figure 1. There is shown at 4 the upper glass-ceramics plate which joins metal deck 1 through a fillet arrangement of the latter, shown at 11 and having, all around the cooking plate 4, a number of slits 12. At 15 there is shown schematically in section, one of the fastening blocks of radiating body 2.

From the above description, and from looking at the drawing, it should be apparent that, there being no electronic control provided for the flame, which is continuously controlled through valve 5, preferably in parallel in the peripheral region and in the central one, by means of the pair of outlets 6 and 6a and since, furthermore, no forced ventilation devices are present, but simply a number of slits for natural discharge of combustion exhaust gases to the environment, the overall height underneath deck 1 can be reduced to about 40 mm for the embodiment shown, having a double outlet valve, and even all the way down to 30 mm when a single outlet is provided. Of course this is of advantage in that it does not pose any difficulty to the possibility of flush-mounting other appliances, like for instance an oven, in the same piece of furniture from the front side thereof.

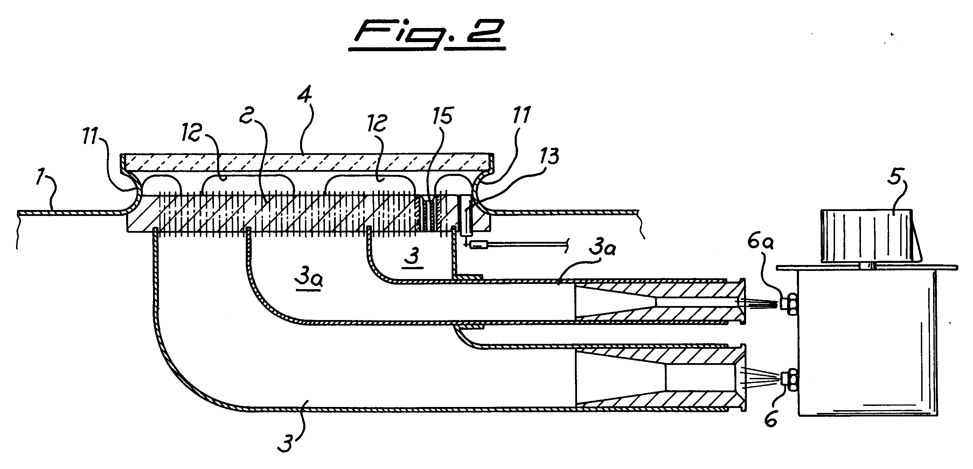

Looking at Fig. 2 it is then apparent how the exhaust gases, coming out through slits 12 (as shown schematically by the radially directed arrows) may impinge on the bottom of a cooking container lying on plate 4,particularly if the former has a larger diameter than the latter, whereby the heat transfer is enhanced by a convective component, and as a consequence the heating efficiency of the burner is improved.

It should be noted that a magnetothermal safety device may be provided, on both heating regions 3 and 3a, by using suitable light emitting warning members (not shown) indicating the presence of residual heat in the plate after the burner has been turned off.

It should eventually be added that the inventive burner may of course be used where more than one cooking area is provided, for instance in a four-burner assembly wherein each burner is controlled by means of a single knob 5.

## Claims

1. A gas burner assembly capable of emitting infrared radiation for glass-ceramics cooking decks including an infrared radiating body (2), mounted on a metal deck (1) and covered by a glass-ceramics plate (4), within said body (2) there being provided the outlet of at least one gas feeding pipe (3, 3a) controlled through a corresponding flowrate control knob (5), characterized in that the combustion area, which coincides with the outlet of said pipe (3, 3a) at the position of radiating body (2), is communicated to the environment through slits (12) uniformly distributed on a peripheral wall (11) of said burner assembly being formed as an upwardly bent portion of said metal deck (1) providing a fillet and support portion of said plate (4) and radiating body (2), to provide radially directed passages, whereby the combustion exhaust gases coming out of said slits (12) follow radial directions upon initially flowing parallel to said deck (1).

2. The gas burner assembly of claim 1, characterized in that said gas flowrate control valve (5) has a double outlet port (6, 6a) for feeding two separate pipes (3, 3a) adapted to heat independent areas of plate (4).

3. The gas burner assembly of claim 2, characterized in that one of said pipes (3a), at least in the outlet area thereof close to the radiating body (2), lies internally and coaxially within said second pipe (3) which is provided to feed the peripheral area of the burner assembly.

## Patentansprüche

1. Gasbrenneranordnung, befähigt zum Emittieren von Infrarotstrahlung für Glaskeramik-Kochmulden, mit einem Infrarotstrahlungskörper (2), befestigt an einer metallischen Deckfläche (1) der Kochmulde und bedeckt von einer Glaskeramikplatte (4), mit mindestens einer Gaszufuhrleitung (3, 3a), die im Durchsatz durch einen zugeordneten Durchflußsteuerknopf (5) gesteuert ist und deren Ausgang in den Infrarotstrahlungskörper (2) hineingeführt ist, dadurch gekennzeichnet, daß der Verbrennungsbereich, der mit dem Ausgang der Gaszufuhrleitung (3, 3a) am Ort des Infrarotstrahlungskörpers zusammenfällt, mit der Umgebung über Schlitze (12) in Verbindung steht, die gleichmäßig verteilt in einer peripheren Wand (11) der Brenneranordnung ausgebildet sind, welche Wand als aufwärts gebogenes Teil der metallischen Deckfläche (1) unter Ausbildung einer Auskehlung und einer Halterung für die Glaskeramikplatte (4) und des Infrarotstrahlungskörpers (2) angeformt ist, wobei die Schlitze (12) radial gerichtete Durchlässe vorgeben, damit die Verbrennungsgase, die aus den Schlitzen heraustreten, radialen Richtungen folgen, nachdem sie anfänglich parallel zu der Deckfläche (1) fließen.

2. Gasbrenneranordnung nach Anspruch 1, dadurch gekennzeichnet, daß das den Gasdurchfluß steuernde Ventil (5) zwei Ausgangsöffnungen (6, 6a) für zwei getrennte Gaszufuhrleitungen (3, 3a) für die Beheizung von zwei unabhängigen Bereichen der Platte (4) aufweist.

3. Gasbrenneranordnung nach Anspruch 2 dadurch gekennzeichnet, daß eine der Leitungen, mindestens in ihrem Auslaßbereich dicht am Strahlungskörper (2), koaxial und im Innern der zweiten Leitung (3) liegt, die der Beheizung eines peripheren Bereiches der Plattte (4) der Brenneranordnung dient.

## Revendications

1. Ensemble à brûleur à gaz capable d'émettre un rayonnement infrarouge pour plaques de cuisson en vitro-céramique comprenant un corps rayonnant (2) monté sur une plaque métallique (1) et couvert par une plaque en vitro-céramique (4), la sortie d'au moins un conduit d'alimentation en gaz (3,3a) commandé par un bouton de réglage de débit correspondant (5) étant prévue à l'intérieur du corps (2), caractérisé en ce que la zone de combustion, qui coïncide avec la sortie du conduit (3,3a) à la position du corps rayonnant (2), communique avec l'ambiance par des fentes (12) distribuées de manière uniforme sur une paroi périphérique (11) du brûleur constituée par une portion recourbée vers le haut de la plaque métallique (1) en formant une portion de support de la plaque (4) et du corps rayonnant (2), pour constituer des passages dirigés radialement, de sorte que les gaz de combustion sortant desdites fentes (12) suivent des directions radiales en s'écoulant initialement parallèlement à ladite plaque (1).

2. Ensemble à brûleur à gaz selon la revendication 1, caractérisé en ce que le robinet de commande de débit (5) comporte une double lumière de sortie (6,6a) pour alimenter deux conduits séparés (3,3a) propres à chauffer des zones indépendantes de la plaque (4).

3. Ensemble à brûleur selon la revendication 2, caractérisé en ce que l'un des conduits (3a), au moins dans sa zone de sortie à proximité du corps rayonnant (2), se tient intérieurement et coaxialement à l'intérieur du second conduit (3) qui est prévu pour alimenter la zone périphérique de l'ensemble à brûleur.
